# EUROPÄISCHE PATENTSCHRIFT

(11) **EP 2 072 953 B1**
(45) Veröffentlichungstag und Bekanntmachung des Hinweises auf die Patenterteilung: **14.11.2018**
(21) Anmeldenummer: 08021905.8
(22) Anmeldetag: 17.12.2008
(51) Int. Cl.: G01C 21/36

(54) **KRAFTFAHRZEUGBENUTZERSCHNITTSTELLE**
VEHICULAR USER INTERFACE
INTERFACE UTILISATEUR POUR VÉHICULE

(30) Priorität: 21.12.2007 DE 102007062196
(43) Veröffentlichungstag der Anmeldung: 24.06.2009
(73) Patentinhaber: Volkswagen Aktiengesellschaft, 38440 Wolfsburg (DE)
(72) Erfinder: Fabian, Thomas, 31139 Hildesheim (DE); Wehling, Ulrike, 38104 Braunschweig (DE)
(74) Vertreter: Banzer, Hans-Jörg

(56) Entgegenhaltungen:
- EP-A2- 0 510 915
- US-A1- 2005 149 254
- US-A1- 2007 155 404

## Beschreibung

Die vorliegende Erfindung betrifft ein Verfahren und eine Vorrichtung, um eine Funktion für ein Kraftfahrzeug auszuwählen und auszuführen, welche von einem Zeitpunkt oder von einem Wegpunkt abhängig ist.

Die US 2005/149254 A1 beschreibt ein Verfahren zur Unterstützung von Aktionen, wobei eine virtuelle Route, welche die gesamte Länge der geplanten Route eines Fahrzeugs abbildet, in Form eines Balkens dargestellt wird.

Die EP 0 510 915 A2 offenbart eine Navigationsvorrichtung für ein Fahrzeug, wobei ein Zielerreichungsgrad in Form eines Verhältnisses der bereits zurückgelegten Fahrstrecke zur gesamten Fahrstrecke eines Fahrzeugs mittels eines Fortschrittbalkens dargestellt wird.

Die US 2007/155404 A1 offenbart ein Verfahren zur Darstellung von Verkehrsinformationen. Dabei kann ein aktueller oder zukünftiger Zeitpunkt mit Hilfe eines Balkens spezifiziert werden, wobei dann die Verkehrsinformation zu diesem Zeitpunkt dargestellt wird. Für eine Benutzerschnittstelle in einem Kraftfahrzeug, welche für nicht zum Fahren notwendige Systeme, wie z.B. Navigation, Mobilfunk, Radio und Fernsehen, verwendet wird, werden heutzutage folgende Bedienelemente verwendet:
- Fortschrittsbalken
   Ein Fortschrittsbalken zeigt dem Insassen innerhalb eines Kraftfahrzeugs einen Fortschritt einer bestimmten Aktion an.
- Slider Button
   Ein Slider Button kann auf einer Bahn bzw. Balken verschoben werden oder mittels eines Drehknopfes oder mittels Verschiebungsknöpfen verschoben werden, um quasikontinuierliche Werte, z.B. Lautstärke, Klang-Einstellungen, einzustellen.
- Knopf zum schnellen vorwärts oder rückwärts Scrollen
   Mit diesem Knopf kann man sich z.B. beim Abspielen eines Hörstücks oder eines Films schnell nach vorn oder nach hinten bewegen, wobei ein punktuelles Anspringen nicht möglich ist.

Es ist nun die Aufgabe der vorliegenden Erfindung, ein Verfahren und eine Vorrichtung bereitzustellen, wobei sowohl der Fortschritt einer bestimmten Aktion darstellbar ist, als auch ein punktuelles Anspringen und damit ein Ausführen einer Funktion abhängig von einem Zeitpunkt oder Wegpunkt möglich ist.

Erfindungsgemäß wird diese Aufgabe durch ein Verfahren zur Ausführung einer von einem Zeitpunkt abhängigen Darstellung eines Kartenabschnitts für ein Kraftfahrzeug nach Anspruch 1, durch eine

Vorrichtung zur Ausführung einer von einem Zeitpunkt abhängigen Darstellung eines Kartenabschnitts für ein Kraftfahrzeug nach Anspruch 6 und durch ein Kraftfahrzeug nach Anspruch 8 gelöst. Die abhängigen Ansprüche definieren bevorzugte und vorteilhafte Ausführungsformen der vorliegenden Erfindung.
Im Rahmen der vorliegenden Erfindung wird ein Verfahren zur Ausführung einer Darstellung eines Kartenabschnitts für ein Kraftfahrzeug bereitgestellt, wobei die Darstellung von einem Zeitpunkt abhängig ist. Dabei wird ein sich kontinuierlich ändernder Messwert über eine Einheit Zeit mittels eines Balkens dargestellt. (D.h. der Messwert ändert sich mit der Zeit.) Innerhalb dieses Balkens ist der Zeitpunkt aus einer Menge mittels des Balkens dargestellter Messwerte bzw. Werte bestimmbar, wobei dann abhängig von diesem bestimmten Zeitpunkt die Darstellung ausgewählt und schließlich ausgeführt wird. Dabei umfassen die Messwerte sowohl gemessene Messwerte als auch zu messende bzw. zukünftige Messwerte.

In einem nicht erfindungsgemäßen Verfahren kann somit der sich kontinuierlich ändernde Messwert (z.B. eine von dem Kraftfahrzeug zurückgelegte Wegstrecke) nicht nur angezeigt werden, sondern der Insasse kann einen beliebigen Punkt innerhalb des Balkens (also innerhalb der Wegstrecke oder innerhalb des Musikstücks) anwählen, worauf dann abhängig von dem angewählten Punkt eine Darstellung (z.B. eine dem Wegpunkt entsprechende Fahrtzeit) ausgeführt wird.
Dabei kann der Balken auf einem Touchscreen dargestellt werden. Innerhalb dieses Balkens kann dann weiterhin mittels eines Fortschrittbalkens der sich kontinuierlich ändernde Messwert dargestellt werden.
Mittels eines Slider Buttons kann auch ein aktueller Zeitpunkt innerhalb von abgespeicherten Daten dargestellt werden. Dabei entspricht dieser aktuelle Zeitpunkt entsprechenden Daten, welche gerade ausgewertet werden, um eine in diesen Daten enthaltene akustische und/oder visuelle Information beispielsweise einem Insassen in dem Kraftfahrzeug wiederzugeben. Durch die Verschiebung des Slider Buttons kann der aktuelle Zeitpunkt und damit entsprechende wiederzugebende Daten neu gewählt werden.
Es wird eine Fahrtzeit als der Balken auf einer elektronischen Anzeigevorrichtung, insbesondere einem Touchscreen, des Kraftfahrzeugs dargestellt. Dabei ist eine Wegstrecke teilweise eine Wegstrecke, welche von dem Kraftfahrzeug bereits zurückgelegt ist, und teilweise eine geplante Wegstrecke, wobei geplant ist, diese geplante Wegstrecke mit dem Kraftfahrzeug zu befahren. Die Fahrtzeit ist eine Zeit, in welcher das Kraftfahrzeug die bisher zurückgelegte Wegstrecke absolviert hat, oder eine Zeit, welche für die geplante Wegstrecke beispielsweise von einem Navigationsgerät eingeplant wird. Bei der Darstellung der Fahrtzeit als Balken entspricht ein Beginn der Fahrtzeit einem ersten Ende des Balkens und ein Ende der Fahrtzeit entspricht einem zweiten Ende des Balkens.
Insbesondere kann über einen Fortschrittsbalken die momentan bzw. aktuell zurückgelegte Fahrtzeit dargestellt werden, indem eine Länge des Fortschrittsbalkens der aktuell zurückgelegten Fahrtzeit entspricht.

Dadurch kann sich ein Insasse des Kraftfahrzeugs vorteilhafterweise sehr rasch einen Überblick darüber verschaffen, welcher Anteil einer insgesamt zurückzulegenden Fahrtzeit bereits zurückgelegt worden ist oder welcher Anteil noch zu absolvieren ist.
Eine Funktion, welche abhängig von einem Zeitpunkt innerhalb der Fahrtzeit ausgewählt werden kann, ist, dass ausgehend von diesem Zeitpunkt ein Ortpunkt ermittelt wird, und dann, beispielsweise mittels eines Navigationsgerät, ein Straßenkartenabschnitt dargestellt wird, welcher den ermittelten Ortpunkt, z.B. in der Mitte des Straßenkartenabschnitts, enthält. Wenn die Fahrtzeit als der Balken dargestellt wird, muss ausgehend von dem gewählten Zeitpunkt der entsprechende Wegpunkt innerhalb der zurückgelegten Wegstrecke, falls es sich bei dem Zeitpunkt um eine vergangenen Zeitpunkt handelt, oder der entsprechende Wegpunkt auf der geplanten Wegstrecke, falls es sich bei dem Zeitpunkt um einen zukünftigen Zeitpunkt handelt, ermittelt werden, um dann ausgehend von dem Wegpunkt den Ortpunkt und damit den Straßenkartenabschnitt zu bestimmen. Um über einen vergangenen Zeitpunkt den Wegpunkt zu ermitteln, können diesbezüglich Wertepaare, welche aus einem Zeitpunkt und einem Wegpunkt bestehen, für eine beliebige Anzahl von Referenzwertepaaren während der Fahrt des Kraftfahrzeugs ermittelt und abgespeichert werden, so dass dann für einen gegebenen vergangenen Zeitpunkt ausgehend von diesen Referenzwertepaaren der zugehörige Wegpunkt ermittelt wird.

Eine weitere mögliche Funktion, welche abhängig von dem Zeitpunkt gewählt wird, ist, dass wiederum ausgehend von dem Zeitpunkt ein Ortpunkt ermittelt wird, wie es vorab beschrieben ist, und dass dieser Ortpunkt, beispielsweise mittels eines Navigationsgerätes, auf einer Karte zusammen mit einer Route dargestellt wird, wobei diese Route die bereits von dem Kraftfahrzeug zurückgelegte Wegstrecke ist.

Eine andere mögliche Funktion, welche abhängig von dem Zeitpunkt gewählt wird, ist, dass wiederum ausgehend von Zeitpunkt ein Ortpunkt ermittelt wird, wie es vorab beschrieben ist, und dass dann für diesen Ortpunkt Wettereigenschaften ermittelt und dargestellt werden. Eine Darstellung der Wettereigenschaften umfasst dabei sowohl eine bildliche Darstellung als auch eine akustische Darstellung, beispielsweise durch eine Ansage einer Wetterinformation. Die Wettereigenschaften umfassen dabei zumindest eine von folgenden Eigenschaften:
- Temperatur,
- Regenwahrscheinlichkeit, d.h. eine prognostizierte Wahrscheinlichkeit, dass Regen fällt,
- eine Niederschlagsmenge, und
- eine Windgeschwindigkeit zusammen mit einer Hauptwindrichtung.
Dabei kann ein Zeitpunkt ermittelt werden, zu welchem das Kraftfahrzeug entweder bei dem Ortpunkt war, wenn es sich um einen vergangenen Zeitpunkt handelt, oder zu welchem das Kraftfahrzeug voraussichtlich den gewählten Ortpunkt erreichen wird, wenn es sich um einen zukünftigen Zeitpunkt handelt. Die Wettereigenschaften können dann für diesen Zeitpunkt ermittelt und dargestellt werden. Wenn es sich um einen Punkt auf der zurückgelegten Wegstrecke handelt, kann wieder mit Hilfe der oben genannten Referenzwertepaare der entsprechende Zeitpunkt bestimmt werden, und wenn es sich um einen Wegpunkt auf der geplanten Wegstrecke handelt, kann der entsprechende Zeitpunkt, zu welchem dieser Wegpunkt voraussichtlich erreicht wird, beispielsweise mit einem Navigationsgerät bestimmt werden, indem das Navigationsgerät ausgehend von dem aktuellen Standpunkt des Kraftfahrzeugs und der auf der geplanten Route zurückzulegenden Strecke bis zu dem ausgewählten Wegpunkt eine Fahrtdauer bestimmt und aus einer Addition der aktuellen Zeit und dieser Fahrtdauer den entsprechenden Zeitpunkt bestimmt.
Dadurch ist es vorteilhafterweise möglich, sich die Wettereigenschaften für einen beliebigen zukünftigen Wegpunkt auf der geplanten Route anzeigen zu lassen, um dann entsprechend reagieren zu können, indem beispielsweise Schneeketten aufgezogen werden oder die Reise unterbrochen wird, um auf besseres Wetter zu hoffen.

Erfindungsgemäß wird ein Ortpunkt auf der Wegstrecke innerhalb einer Straßenkarte, welche z.B. von einem Navigationsgerät dargestellt wird, ausgewählt. Anschließend wird ausgehend von diesem Ortpunkt ein Zeitpunkt ermittelt und dann dieser Zeitpunkt innerhalb des Balkens dargestellt. Bei der Ermittlung des Zeitpunkts ausgehend von dem Ortpunkt kann wiederum auf die oben erwähnten Referenzwertepaare oder auf ein Navigationsgerät zurückgegriffen werden.

Da der dargestellte Balken den Vorteil bietet, dass ein Mensch rasch den Anteil der Fahrtzeit erfasst, welcher zurückgelegt ist oder noch vor ihm liegt, kann diese Information über die zurückgelegte bzw. vor ihm liegende Fahrtzeit vorteilhafterweise rasch für jeden Ortpunkt innerhalb der auf der Straßenkarte dargestellten Route ermittelt werden. Dies gilt insbesondere dann, wenn die Darstellung der Fahrtzeit mittels des Balkens linear erfolgt, wenn also ein mittels des Balkens dargestellter Zeitabstand bestimmter Länge unabhängig von einer Stelle, an welcher er in dem Balken dargestellt ist, immer demselben Zeitintervall entspricht.

Im Rahmen der vorliegenden Erfindung wird auch eine Vorrichtung nach Anspruch 6 bereitgestellt. Die Vorteile entsprechen dabei im Wesentlichen den Vorteilen des erfindungsgemäßen Verfahrens, welche vorab ausgeführt worden sind, so dass hierauf eine Wiederholung verzichtet wird.
Gemäß einer erfindungsgemäßen Ausführungsform umfasst die Vorrichtung einen Touchscreen bzw. einen berührungssensitiven Bildschirm und ist derart ausgestaltet, dass der Balken auf dem Touchscreen dargestellt wird.

Beispielsweise umfasst die Vorrichtung einen Slider Button bzw. einen Gleitregler, welcher über den Balken gleitet.
Die vorliegende Erfindung ist insbesondere für ein Kraftfahrzeug im Zusammenspiel mit einem Navigationsgerät geeignet. Selbstverständlich ist die vorliegende Erfindung jedoch nicht auf diesen bevorzugten Anwendungsbereich beschränkt, sondern kann zum einen auch für andere Fortbewegungsmittel, z.B. Schiffe, Flugzeuge und schienengebundene Fahrzeuge, eingesetzt werden.
Im Folgenden wird die vorliegende Erfindung mit Bezug auf die Zeichnung anhand bevorzugter Ausführungsformen erläutert.
Fig. 1 stellt schematisch ein erfindungsgemäßes Kraftfahrzeug mit einer erfindungsgemäßen Vorrichtung dar
In Fig. 2 ist dargestellt, was erfindungsgemäß von der Vorrichtung der Fig. 1 angezeigt werden könnte.
Fig. 3 stellt ein Beispiel eines Balkens mit Slider Button dar.
. In Fig. 1 ist schematisch ein erfindungsgemäßes Kraftfahrzeug 1 dargestellt, welches ein Navigationssystem 2 und eine Anzeigevorrichtung 4 mit einem Touchscreen 3 umfasst.
Der Touchscreen 3 stellt zum einen eine Straßenkarte 6 und zum anderen einen Balken 5 dar. Sowohl auf der Straßenkarte 6 als auch mittels des Balkens 5 ist eine Route dargestellt, auf welcher das Kraftfahrzeug 1 fährt. Dabei entsprechen die Punkte 10-14 auf der Route innerhalb der Straßenkarte 6 Punkten bzw. senkrechten Strichen 20-24 innerhalb des Balkens 5. Ein erster Wegpunkt 10 markiert einen Beginn der in der Straßenkarte 6 dargestellten Route und ein letzter Wegpunkt 14 markiert einen Endpunkt oder ein Ende dieser Route. In der Balkendarstellung entspricht ein erster Punkt 20 einem Beginn des Balkens 5 und somit dem ersten Wegpunkt 10, und ein letzter Punkt 24 entspricht einem Ende des Balkens 5 und somit dem letzten Wegpunkt 14. Ein mittlerer oder aktueller Wegpunkt 12 entspricht dem aktuellen Standort des Kraftfahrzeugs 1 innerhalb der in der Straßenkarte 6 dargestellten Route und entspricht demnach einem mittleren oder aktuellen Punkt 22 in dem Balken 5. Ein zweiter Wegpunkt 11 in der Route stellt einen Wegpunkt auf einer bereits von dem Kraftfahrzeug 1 zurückgelegten Wegstrecke dar, während ein dritter Wegpunkt 13 auf einer geplanten Wegstrecke der Route liegt. Dem zweiten Wegpunkt 11 entspricht ein zweiter Punkt 21, und dem dritten Wegpunkt 13 entspricht ein dritter Wegpunkt 23 in dem Balken 5.
Je nachdem, ob mittels des Balkens 5 eine Wegstrecke oder eine Fahrtzeit angezeigt wird, handelt es sich bei den auf dem Balken 5 dargestellten Punkten 20-24 um Wegpunkte oder um Zeitpunkte. Wenn es sich bei den Punkten 20-24 um Wegpunkte handelt, gilt für jeden dieser Balkenwegpunkte 20-24, dass ein Abstand von dem jeweiligen Balkenwegpunkt 20-24 zu dem ersten Balkenwegpunkt 20 multipliziert mit einer Konstante gleich einem Abstand von dem entsprechenden Wegpunkt 10-14 auf der Route zu dem ersten Wegpunkt 10 auf der Route ist. Dabei ist diese Konstante natürlich für alle Abstände von dem jeweiligen Balkenwegpunkt 20-24 zu dem ersten Balkenwegpunkt 20 dieselbe. Mit anderen Worten repräsentiert der Balken von seinem ersten Punkt 20 bis zu seinem letzten Punkt 24 maßstabsgetreu oder linear die auf der Straßenkarte 6 dargestellte Route zwischen dem ersten Wegpunkt 10 und dem letzten Wegpunkt 14. Anders ausgedrückt entspricht ein Produkt aus der Länge des Balkens 5 und der Konstante einer Länge der Route von dem ersten Wegpunkt 10 bis zu dem letzten Wegpunkt 14 in der Realität.

Wenn es sich bei den Punkten 20-24 um Zeitpunkte handelt, wenn also der Balken 5 eine Fahrtzeit darstellt, werden die auf der Straßenkarte 6 dargestellten Wegpunkte 10-14 wie folgt in die Zeitpunkte 20-24 umgesetzt:
Die mittels des Balkens 5 dargestellte Fahrtzeit (oder die Länge des Balkens 5) entspricht der Fahrtzeit des Kraftfahrzeugs 1, welche das Kraftfahrzeug 1 für eine Fahrt von dem ersten Wegpunkt 10 zu dem letzten Wegpunkt 14 auf der in der Straßenkarte 6 dargestellten Route benötigt bzw. benötigen wird. Demnach entspricht der erste Wegpunkt 10 dem ersten Zeitpunkt 20 und der letzte Wegpunkt 14 dem letzten Zeitpunkt 24 des Balkens 5, wobei dieser letzte Zeitpunkt 24 mittels des Navigationssystems 2 aufgrund der geplanten Wegstrecke von dem aktuellen Wegpunkt 12 zu dem letzten Wegpunkt 14 auf der Route berechnet wird. Der zeitliche Abstand zwischen der aktuellen Zeit bzw. dem aktuellen Zeitpunkt 22 und dem ersten Zeitpunkt 20 entspricht der Fahrtzeit, welche für den Teil der Route von dem ersten Wegpunkt 10 bis zu dem aktuellen Wegpunkt 12 benötigt worden ist. Der zweite Zeitpunkt 21 entspricht einem Zeitpunkt, zu welchem sich das Kraftfahrzeug 1 bei dem zweiten Wegpunkt 11 auf der Route befand. Dieser zweite Zeitpunkt wird von der Vorrichtung 4 dabei berechnet, indem für bestimmte Wegpunkte auf dem bereits zurückgelegten Teil der Route Referenzwertepaare gespeichert werden, welche aus dem jeweiligen Wegpunkt und derjenigen Zeit bestehen, zu welcher sich das Kraftfahrzeug 1 an dem jeweiligen Wegpunkt befand, und anhand dieser Referenzwertepaare für einen bestimmten Wegpunkt, wie z.B. für den zweiten Wegpunkt 11, dann der entsprechende Zeitpunkt 21 interpoliert wird. Für den dritten Wegpunkt 13, welcher auf einer geplanten Wegstrecke der Route liegt, wird der entsprechende Zeitpunkt 23 mit Hilfe des Navigationssystems 2 abhängig von dem Routenabschnitt zwischen dem dritten Wegpunkt 13 und dem aktuellen Wegpunkt 12 berechnet.

Natürlich ist es auch möglich, dass für den zweiten Wegpunkt 11 der entsprechende Zeitpunkt 21 dadurch berechnet wird, dass das Navigationssystem eine Fahrtdauer von dem aktuellen Wegpunkt 12 (quasi zurück) zu dem zweiten Wegpunkt 11 berechnet und der entsprechende Zeitpunkt 11 dann aus einer Summe aus aktueller Zeit und dieser Fahrtdauer berechnet wird.

Um den Balken 5 besser in einen Anteil, welcher der zurückgelegten Wegstrecke entspricht, und einen Anteil, welcher der noch zurückzulegenden Wegstrecke entspricht, zu unterteilen, existiert ein Fortschrittsbalken 8, welcher die bereits zurückgelegte Wegstrecke darstellt.

Daher zeigt der Fortschrittsbalken 8 die (tatsächliche) Fahrzeit im Vergleich zur geplanten oder berechneten Fahrtzeit, welche der Gesamtlänge des Balkens 5 entspricht, an.

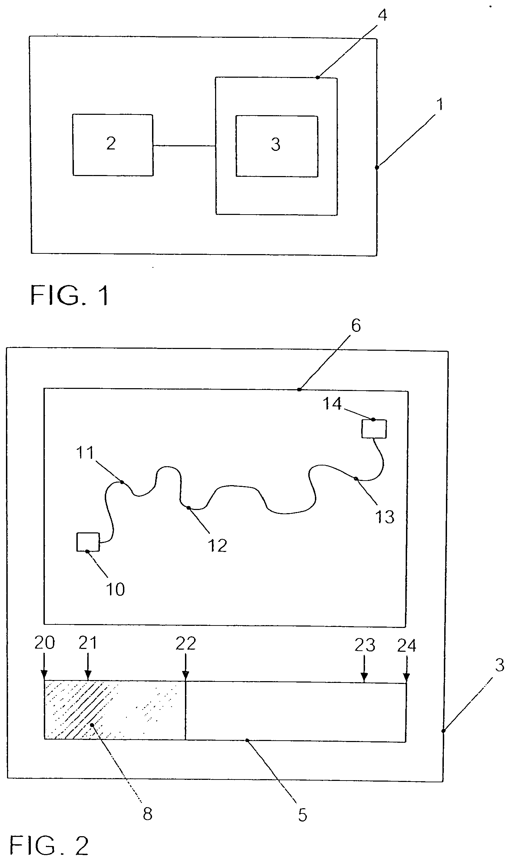

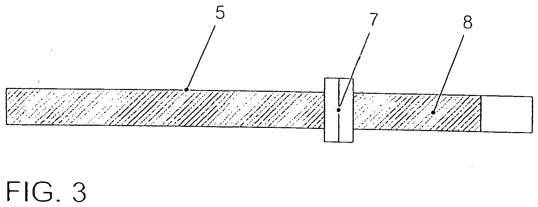

Während bei dem in Fig. 2 dargestellten Beispiel ein beliebiger Punkt 20-24 innerhalb des Balkens 5 einfach dadurch ausgewählt werden kann, indem auf den entsprechenden Punkt 20-24 innerhalb des Touchscreens 3 gedrückt wird, ist in Fig. 3 ein Beispiel des Balkens 5 dargestellt, wobei ein Punkt innerhalb des Balkens mit Hilfe eines Slider Buttons 7 bestimmt oder ausgewählt wird. Dabei kann dieser Slider Button 7 entweder direkt bzw. manuell von einem Benutzer verschoben und betätigt werden oder aber der Sider Button 7 dient nur zur optischen Darstellung und wird mittels einer weiteren Verstellvorrichtung (nicht dargestellt), z.B. eines Drehknopfs oder zweier Verstellknöpfen, wobei einer den Slider Button 5 nach links und der andere den Slider Button 7 nach rechts verstellt, bedient, d.h. verschoben und betätigt.

Gemäß einem weiteren Beispiel kann es sich bei dem in Fig. 3 dargestellten Balken 5 um die Darstellung eines Datenstroms handeln, welcher Audiodaten oder Videodaten enthält. Dieser Datenstrom kann z.B. kontinuierlich aus dem Internet heruntergeladen werden oder von einem Rundfunksender oder von einem Fernsehsender empfangen werden. Der Fortschrittsbalken 8 zeigt dann an, welcher Anteil des gesamten Datenstroms, z.B. eines gesamten Musikstücks, bereits abgespeichert oder heruntergeladen worden ist. Der Slider Button 7 markiert den Zeitpunkt beispielsweise in dem Musikstück, welcher gerade akustisch wiedergegeben wird. Indem nun dieser Slider Button 7 auf dem Touchscreen 3 ergriffen und verschoben wird, kann innerhalb des Fortschrittsbalken 8 ein (neuer) Zeitpunkt gewählt werden und die Wiedergabe des Musikstücks zu diesem Zeitpunkt innerhalb des Musikstücks neu gestartet bzw. fortgesetzt werden.

### BEZUGSZEICHENLISTE

- 1: Kraftfahrzeug
- 2: Navigationssystem
- 3: Touchscreen
- 4: Vorrichtung
- 5: Balken
- 6: Karte
- 7: Slider Button
- 8: Fortschrittsbalken
- 10-14: Wegpunkt
- 20-24: Punkt

## Patentansprüche

1. Verfahren zur Ausführung einer von einem bestimmten Zeitpunkt (20-24) abhängigen Darstellung eines Kartenabschnitts für ein Kraftfahrzeug (1),
wobei ein sich kontinuierlich ändernder Messwert über eine Einheit Zeit mittels eines Balkens (5) dargestellt wird,
wobei der sich kontinuierlich ändernde Messwert eine Fahrtzeit des Kraftfahrzeugs (1) ist, wobei eine Wegstrecke teilweise eine von dem Kraftfahrzeug (1) zurückgelegte Wegstrecke und teilweise eine geplante Wegstrecke ist, deren Befahrung durch das Kraftfahrzeug (1) geplant ist,
wobei die Fahrtzeit teilweise eine von dem Kraftfahrzeug (1) auf der zurückgelegten Wegstrecke absolvierte Fahrtzeit und teilweise eine für die geplante Wegstrecke geplante Fahrtzeit ist,
wobei die Fahrtzeit als der Balken (5) auf einer elektronischen Vorrichtung (4) des Kraftfahrzeugs (1) dargestellt wird,
wobei ein Beginn der Fahrtzeit als ein erstes Ende (20) des Balkens (5) und ein Ende der Fahrtzeit als ein zweites Ende (24) des Balkens (5) dargestellt wird,
wobei ein Ortpunkt (10-14) auf der Wegstrecke in einer Karte (6) ausgewählt wird,
wobei der Kartenabschnitt den entsprechenden Ortpunkt (10-14) enthält,
wobei ausgehend von dem Ortpunkt (10-14) der bestimmte Zeitpunkt (20-24) ermittelt und maßstabsgetreu innerhalb des Balkens (5) dargestellt wird, und
wobei Wertepaare, welche aus einem Zeitpunkt und einem Wegpunkt auf der zurückgelegten Wegstrecke bestehen, während der Fahrt des Kraftfahrzeugs abgespeichert werden, um ausgehend von dem Ortpunkt den bestimmten Zeitpunkt (20-24) der Fahrtzeit zu ermitteln.

2. Verfahren nach Anspruch 1, **dadurch gekennzeichnet, dass** Wettereigenschaften für den Ortpunkt (10-14) ermittelt und dargestellt werden, und dass die Wettereigenschaften zumindest eine von Eigenschaften einer Gruppe aufweisen, wobei die Gruppe umfasst:
• Temperatur,
• Regenwahrscheinlichkeit,
• Niederschlagsmenge, und
• Windgeschwindigkeit.

3. Verfahren nach Anspruch 2, **dadurch gekennzeichnet, dass** die Wettereigenschaften für den Zeitpunkt ermittelt werden.

4. Verfahren nach einem der Ansprüche 1-3, **dadurch gekennzeichnet, dass** die Darstellung der Fahrtzeit linear mittels des Balkens (5) erfolgt.

5. Verfahren nach einem der vorhergehenden Ansprüche, **dadurch gekennzeichnet, dass** der Balken (5) auf einem Touchscreen (3) dargestellt wird.

6. Vorrichtung zur Ausführung einer von einem bestimmten Zeitpunkt abhängigen Darstellung eines Kartenabschnitts für ein Kraftfahrzeug,
wobei die Vorrichtung (4) derart ausgestaltet ist,
dass die Vorrichtung (4) einen sich kontinuierlich ändernden Messwert über eine Einheit Zeit mittels eines Balkens (5) darstellt,
wobei der sich kontinuierlich ändernde Messwert eine Fahrtzeit des Kraftfahrzeugs (1) ist, wobei eine Wegstrecke teilweise eine von dem Kraftfahrzeug (1) zurückgelegte Wegstrecke und teilweise eine geplante Wegstrecke ist, deren Befahrung durch das Kraftfahrzeug (1) geplant ist,
wobei die Fahrtzeit teilweise eine von dem Kraftfahrzeug (1) auf der zurückgelegten Wegstrecke absolvierte Fahrtzeit und teilweise eine für die geplante Wegstrecke geplante Fahrtzeit ist,
wobei die Vorrichtung (4) derart ausgestaltet ist,
dass die Vorrichtung (4) die Fahrtzeit als der Balken (5) auf einer elektronischen Vorrichtung (4) des Kraftfahrzeugs (1) darstellt,
dass die Vorrichtung (4) einen Beginn der Fahrtzeit als ein erstes Ende (20) des Balkens (5) und ein Ende der Fahrtzeit als ein zweites Ende (24) des Balkens (5) darstellt,
dass mittels der Vorrichtung (4) ein Ortpunkt (10-14) auf der Wegstrecke in einer Karte (6) auswählbar ist,
dass die Vorrichtung (4) den Kartenabschnitt, welcher den entsprechenden Ortpunkt (10-14) enthält, darstellt,
dass die Vorrichtung (4) ausgehend von dem Ortpunkt (10-14) den bestimmten Zeitpunkt (20-24) ermittelt und maßstabsgetreu innerhalb des Balkens (5) darstellt,
dass die Vorrichtung (4) Wertepaare, welche aus einem Zeitpunkt und einem Wegpunkt auf der zurückgelegten Wegstrecke bestehen, während der Fahrt des Kraftfahrzeugs abspeichert, um ausgehend von dem Ortpunkt den bestimmten Zeitpunkt (20-24) der Fahrtzeit zu ermitteln.

7. Vorrichtung nach Anspruch 6, **dadurch gekennzeichnet, dass** die Vorrichtung (4) zur Durchführung des Verfahrens nach einem der Ansprüche 1-5 ausgestaltet ist.

8. Kraftfahrzeug mit einer Vorrichtung nach Anspruch 6 oder 7.

## Claims

1. Method for implementing a display, which is dependent on a specific point in time (20-24), of a portion of a map for a motor vehicle (1),
wherein a continuously changing measured value is displayed over a unit of time by means of a bar (5),
wherein the continuously changing measurement value is a travel time of the motor vehicle (1),
wherein a route is partially a route travelled by the motor vehicle (1) and partially a planned route, which it is planned for the motor vehicle (1) to travel along,
wherein the travel time is partially a travel time experienced by the motor vehicle (1) on the route travelled and partially a travel time planned for the planned route,
wherein the travel time is displayed as the bar (5) on an electronic device (4) of the motor vehicle (1),
wherein a start of the travel time is displayed as a first end (20) of the bar (5) and an end of the travel time is displayed as a second end (24) of the bar (5),
wherein a location (10-14) on the route is selected on a map (6),
wherein the portion of the map contains the corresponding location (10-14),
wherein the determined point in time (20-24) is determined starting from the location (10-14) and is displayed true to scale within the bar (5), and
wherein value pairs, which are composed of a point in time and a point on the route travelled along, are stored while the motor vehicle is travelling, in order to determine the specific point in time (20-24) of the travel time starting from the location.

2. Method according to Claim 1, **characterized in that** weather properties are determined for the location (10-14) and displayed, and **in that** the weather properties have at least one of the properties of a group, wherein the group comprises:
• temperature,
• probability of rain,
• quantity of precipitation and
• wind speed.

3. Method according to Claim 2, **characterized in that** the weather properties are determined for the point in time.

4. Method according to one of Claims 1-3, **characterized in that** the display of the travel time is implemented linearly by means of the bar (5).

5. Method according to one of the preceding claims, **characterized in that** the bar (5) is displayed on a touch screen (3).

6. Device for implementing a display, which is dependent on a specific point in time, of a portion of a map for a motor vehicle,
wherein the device (4) is configured in such a way
that the device (4) displays a continuously changing measured value over a unit of time by means of a bar (5),
wherein the continuously changing measured value is a travel time of the motor vehicle (1),
wherein a route is partially a route travelled along by the motor vehicle (1) and partially a planned route, which it is planned for the motor vehicle (1) to travel along,
wherein the travel time is partially a travel time experienced by the motor vehicle (1) on the route travelled along and partially a travel time which is planned for the planned route,
wherein the device (4) is configured in such a way
that the device (4) displays the travel time as the bar (5) on an electronic device (4) of the motor vehicle (1),
in that the device (4) displays a start of the travel time as a first end (20) of the bar (5) and an end of the travel time as a second end (24) of the bar (5),
in that a location (10-14) on the route can be selected on a map (6) by means of the device (4),
in that the device (4) displays the portion of a map which contains the corresponding location (10-14),
in that the device (4) determines the specific point in time (20-24) starting from the location (10-14) and displays it true to scale within the bar (5),
in that the device (4) stores value pairs, which are composed of a point in time and a location on the route travelled along, while the motor vehicle is travelling, in order to determine the specific point in time (20-24) of the travel time starting from the location.

7. Device according to Claim 6, **characterized in that** the device (4) is configured to carry out the method according to one of Claims 1-5.

8. Motor vehicle having a device according to Claim 6 or 7.

## Revendications

1. Procédé pour réaliser une représentation d'une portion de carte dépendant d'un instant déterminé (20-24) pour un véhicule automobile (1),
une valeur de mesure variant en continu étant représentée par le biais d'une unité de temps au moyen d'une poutre (5),
la valeur de mesure variant en continu étant un temps de conduite du véhicule automobile (1),
une distance étant en partie une distance parcourue par le véhicule automobile (1) et étant en partie une distance prévue que le véhicule automobile (1) doit parcourir,
le temps de conduite étant en partie un temps de conduite effectué par le véhicule automobile (1) sur la distance parcourue et étant en partie un temps de conduite prévu pour la distance prévue,
le temps de conduite étant représenté sous forme de poutre (5) sur un dispositif électronique (4) du véhicule automobile (1),
un début du temps de conduite étant représenté sous forme d'une première extrémité (20) de la poutre (5) et une fin du temps de conduite étant représentée sous forme d'une deuxième extrémité (24) de la poutre (5),
un emplacement ponctuel (10-14) sur la distance étant sélectionné dans une carte (6),
la portion de la carte contenant l'emplacement ponctuel correspondant (10-14),
à partir de l'emplacement ponctuel (10-14), l'instant déterminé (20-24) étant déterminé et étant représenté à l'échelle à l'intérieur de la poutre (5), et
des paires de valeurs constituées par un instant et un point de distance sur la distance parcourue étant mémorisées pendant la conduite du véhicule automobile afin de déterminer à partir de l'emplacement ponctuel, l'instant déterminé (20-24) du temps de conduite.

2. Procédé selon la revendication 1, **caractérisé en ce que** des propriétés météorologiques sont déterminées et représentées pour l'emplacement ponctuel (10-14) et **en ce que** les propriétés météorologiques présentent au moins une des propriétés parmi un groupe comprenant les propriétés suivantes :
- température,
- probabilité de pluie,
- quantité de précipitations, et
- vitesse du vent.

3. Procédé selon la revendication 2, **caractérisé en ce que** les propriétés météorologiques sont déterminées pour l'instant.

4. Procédé selon l'une quelconque des revendications 1 à 3, **caractérisé en ce que** la représentation du temps de conduite s'effectue linéairement au moyen de la poutre (5).

5. Procédé selon l'une quelconque des revendications précédentes, **caractérisé en ce que** la poutre (5) est représentée sur un écran tactile (3).

6. Dispositif pour mettre en oeuvre une représentation dépendant d'un instant déterminé d'une portion de carte pour un véhicule automobile,
le dispositif (4) étant configuré de telle sorte
que le dispositif (4) représente une valeur de mesure variant en continu par le biais d'une unité de temps au moyen d'une poutre (5),
la valeur de mesure variant en continu étant un temps de conduite du véhicule automobile (1),
une distance étant en partie une distance parcourue par le véhicule automobile (1) et étant en partie une distance prévue que le véhicule automobile (1) doit parcourir,
le temps de conduite étant en partie un temps de conduite effectué par le véhicule automobile (1) sur la distance parcourue et étant en partie un temps de conduite prévu pour la distance prévue,
le dispositif (4) étant configuré de telle sorte que le dispositif (4) représente le temps de conduite sous la forme de la poutre (5) sur un dispositif électronique (4) du véhicule automobile (1),
que le dispositif (4) représentent un début du temps de conduite sous la forme d'une première extrémité (20) de la poutre (5) et une fin du temps de conduite sous la forme d'une deuxième extrémité (24) de la poutre (5),
qu'emplacement ponctuel (10-14) sur la distance puisse être sélectionné au moyen du dispositif (4) dans une carte (6),
que le dispositif (4) représente la portion de la carte qui contient l'emplacement ponctuel correspondant (10-14),
que le dispositif (4), à partir de l'emplacement ponctuel (10-14), détermine l'instant déterminé (20-24) et le représente à l'échelle à l'intérieur de la poutre (5),
que le dispositif (4) mémorise des paires de valeurs qui sont constituées d'un instant et d'un point de la distance sur la distance parcourue pendant la conduite du véhicule automobile, afin de déterminer à partir de l'emplacement ponctuel l'instant déterminé (20-24) du temps de conduite.

7. Dispositif selon la revendication 6, **caractérisé en ce que** le dispositif (4) est configuré pour mettre en oeuvre le procédé selon l'une quelconque des revendications 1 à 5.

8. Véhicule automobile comprenant un dispositif selon la revendication 6 ou 7.
